# EUROPEAN PATENT APPLICATION

(11) **EP 4 794 412 A1**
(43) Date of publication of application: **19.08.2026**
(21) Application number: 24892738.6
(22) Date of filing: 04.06.2024
(51) Int. Cl.: H04W 72/04, H04L 1/1825, H04L 1/1812, H04L 1/1829, H04W 72/0446, H04W 72/11, H04W 72/232, H04L 1/1867

(54) **RESOURCE CONFIGURATION METHOD, TRANSMISSION METHOD, COMMUNICATION NODE, AND STORAGE MEDIUM**

(30) Priority: 22.11.2023 CN 202311582378
(71) Applicant: ZTE CORPORATION, Shenzhen, Guangdong 518057 (CN)
(72) Inventor: REN, Min, Shenzhen, Guangdong 518057 (CN); HAN, Xianghui, Shenzhen, Guangdong 518057 (CN); GOU, Wei, Shenzhen, Guangdong 518057 (CN); SHI, Jing, Shenzhen, Guangdong 518057 (CN)
(74) Representative: Aipex B.V.
(86) International application number: PCT/CN2024/097248
(87) International publication number: WO 2025/107573

(57) **Abstract**

Provided are a resource configuration method, a transmission method, a communication node, and a storage medium. The method includes receiving a reference resource information set of a physical channel, inputting the reference resource information set into a set functional module to obtain an operation result of the set functional module, and configuring a resource of the physical channel according to the operation result.

## Description

### CROSS-REFERENCES TO RELATED APPLICATIONS

The present application claims priority to Chinese Patent Application No. 202311582378.2 filed with the China National Intellectual Property Administration (CNIPA) on Nov. 22, 2023, and entitled "Resource Configuration Method, Transmission Method, Communication Node, and Storage Medium", the disclosure of which is incorporated herein by reference in its entirety.

### TECHNICAL FIELD

The present application relates to the field of wireless communication technologies, for example, to a resource configuration method, a transmission method, a communication node, and a storage medium.

### BACKGROUND

In the current technology of multiple repeated transmissions for uplink configured grant (CG) physical channels in a mobile communication system, the first transmission time-domain position is specified to be on the first transmission occasion (TO) or on a transmission occasion corresponding to redundancy version (RV) 0. This leads to a situation where the arrival of a service and a TO cannot be fully aligned, resulting in additional latency. In addition, the hybrid automatic repeat reQuest (HARQ) feedback mechanism on a network-side for the uplink CG physical channel results in an increase in downlink control information (DCI) overhead or multiple invalid repeated transmissions of the physical channel, and the transmission efficiency of the physical channel needs to be improved.

### SUMMARY

The present application provides a resource configuration method, a transmission method, a communication node, and a storage medium.

Embodiments of the present application provide a resource configuration method. The resource configuration method includes receiving a reference resource information set of a physical channel, inputting the reference resource information set into a set functional module to obtain an operation result of the set functional module, and configuring a resource of the physical channel according to the operation result.

Embodiments of the present application also provide a transmission method. The transmission method includes sending a reference resource information set of a physical channel, inputting the reference resource information set into a set functional module to obtain an operation result of the set functional module, and transmitting the physical channel according to the operation result.

Embodiments of the present application also provide a communication node. The communication node includes a memory, a processor, and a computer program stored in the memory and executable on the processor, where the processor, when executing the computer program, implements the resource configuration method or the transmission method described above.

Embodiments of the present application also provide a computer-readable storage medium storing a computer program that, when executed by a processor, implements the resource configuration method or the transmission method described above.

### BRIEF DESCRIPTION OF DRAWINGS

FIG. 1 is a flowchart of a resource configuration method according to an embodiment.
FIG. 2 is a flowchart of a transmission method according to an embodiment.
FIG. 3 is a diagram illustrating a delay time involving three TOs according to an embodiment.
FIG. 4 is a diagram illustrating nominal repetitions and actual repetitions according to an embodiment.
FIG. 5 is a diagram illustrating the structure of a resource configuration apparatus according to an embodiment.
FIG. 6 is a diagram illustrating the structure of a transmission apparatus according to an embodiment.
FIG. 7 is a diagram illustrating the hardware structure of a communication node according to an embodiment.

### DETAILED DESCRIPTION

The present application is described in conjunction with drawings and embodiments. It is to be understood that the specific embodiments described herein are intended to explain the present application and not to limit the present application. It is to be noted that if not in collision, embodiments of the present application and features therein may be combined with each other in any manner. Additionally, it is to be noted that for ease of description, only part, not all, of structures related to the present application are illustrated in the drawings.

Currently, the 5th-generation mobile communication technology (referred to as 5G) faces an increasing number of requirements. From the perspective of standard formulation and technological development trends, the 5G system aims to support new demand changes by pursuing technical targets such as higher data rates (Gbps), massive connectivity (1M/km²), ultra-low latency (1 ms), enhanced reliability, and a hundred-fold improvement in energy efficiency.

In the first phase of 5G, slot-based aggregation based on dynamic grant-physical uplink shared channel (DG-PUSCH) and slot-based repetitions based on configured grant-physical uplink shared channel (CG-PUSCH) were introduced to ensure coverage. Slot-based repetitions mean that a terminal repeats transmissions of a transport block (TB) across multiple slots, and the TB has the same time-domain resource allocation in each slot. In the second phase of 5G, to support features of ultra-high reliability and ultra-low latency and to complete the transmission of low-latency, high-reliability services within a relatively short transmission duration, enhancements are required for uplink aggregation transmission based on dynamic grant and uplink repetition transmission based on configured grant. Therefore, repetitions of transmitting the same TB once or more than once within the same slot, or repetitions of transmitting the same TB across slot boundaries over multiple consecutive available slots, are introduced.

With the arrival of CG-PUSCH services, standards specify that the first transmission time-domain position of a CG-PUSCH occurs on the first TO or on the TO corresponding to RV index 0 (RV0). When the time-domain position at which a CG-PUSCH service arrives misses the first TO or the TO corresponding to RV0, in an implementation scenario, transmission of the CG-PUSCH may be deferred to the first TO of the next period or to the TO corresponding to RV0 in the current period or the next period.

In addition, in some embodiments, upon receiving a TB of a CG-PUSCH, the network side may send DCI scrambled by a configured scheduling-radio network temporary identifier (CS-RNTI) to trigger a DG-PUSCH to indicate a negative acknowledgment (NACK) for a reception error. If a TB of a triggered retransmission DG-PUSCH is not received after a configured time window (ConfigGrantTimer) expires, it represents a positive acknowledgment (ACK) indicating a reception success.

In view of resource configuration for a CG-PUSCH physical channel, in the embodiments of the present application, reference resource information is input into a set functional module, and resources of the physical channel are configured by utilizing the operation result of the set functional module, thereby effectively reducing latency of the CG-PUSCH transmission and improving correctness of the CG-PUSCH transmission.

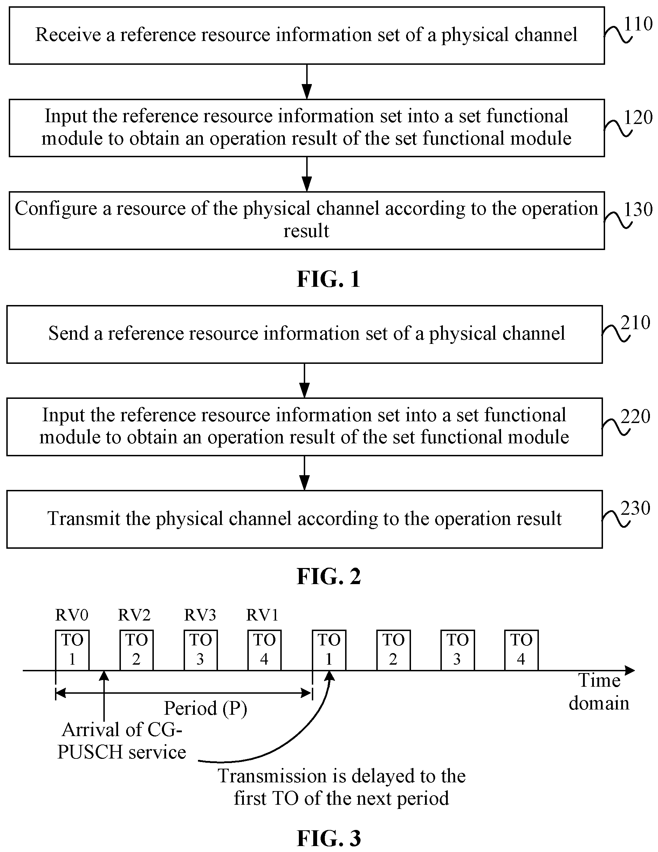

FIG. 1 is a flowchart of a resource configuration method according to an embodiment. The method may be applied to a first communication node. The first communication node mainly refers to a network-side node, such as a base station or an access point (AP). As shown in FIG. 1, the method provided in this embodiment includes 110, 120, and 130.

In 110, a reference resource information set of a physical channel is received.

In 120, the reference resource information set is input into a set functional module to obtain an operation result of the set functional module.

In 130, a resource of the physical channel is configured according to the operation result.

In this embodiment, the reference resource information set of the physical channel is first received. The physical channel may be a configured grant physical uplink shared channel. The received reference resource information set serves as an input parameter to be input into the set functional module to generate an operation result. Resources of the physical channel are then configured according to the operation result of the set functional module. The set functional module may be a module that implements inference of optimal resource configuration information for the physical channel using any algorithm, such as a machine learning algorithm or a neural network, to infer positions of transmission occasions, sizes of repeated transport blocks, a resource pool corresponding to a service type of a terminal-side service, and/or time-frequency domain resources. For example, the set functional module is an artificial intelligence (AI) model. The AI model, a computer program constructed through techniques such as machine learning and deep learning, is trained on a large volume of sample data (including known reference resource information sets and corresponding optimal resource configuration information). The AI model can automatically learn and extract features from input data, perform analysis, inference, and prediction based on acquired knowledge. Thus, in practical application, an actual reference resource information set is input into the AI model to automatically output an operation result. The operation result serves as a basis for configuring resources of the physical channel. Since the set functional module possesses the capability to predict optimal resource information from the reference resource information set, the resource configuration method can effectively reduce latency of the physical channel transmission and improve correctness of the physical channel transmission.

In an embodiment, the reference resource information set includes at least one of the following: an arrival time, a data packet size, and a service performance requirement of a terminal-side service; an arrival time, a data packet size, a service performance requirement, and a frame structure of a terminal-side service; a service type of a terminal-side service; an arrival time and a period of a terminal-side service in a future period of time associated with a currently transmitted service; a frame structure, an idle resource, and a service transmission condition reported by a terminal; time-frequency domain resource information; a semi-static frame structure and a non-transmittable symbol pattern; or a semi-static frame structure and channel monitoring information.

In an embodiment, the operation result includes at least one of the following: a position of a first transmission occasion and a determination that the first transmission occasion is RV0; resource information corresponding to a service type of a terminal-side service; resource information of a terminal-side service and in response to the terminal-side service being not transmitted, allocating idle resources to other traffic channels; resource information corresponding to a terminal-side service in a future period of time associated with a currently transmitted service; a resource pool corresponding to a service type of a terminal-side service; time-frequency domain resources of a terminal-side service; a size of a nominal repetition transport block and a size of an actual repetition transport block; or enabling additional transmission occasions, where the additional transmission occasions include N transmission occasions added on the basis of configured repetition transmission occasions, and N is an integer greater than 0.

In an embodiment, the time-domain length of the nominal repetition transport block is determined according to a time domain resource allocation (TDRA) table.

In an embodiment, the time-domain length of the actual repetition transport block is determined according to the time-domain length of the actual transmission.

In an embodiment, a single nominal repetition transport block is composed of multiple actual repetition transport blocks.

In an embodiment, the method also includes the following:

In response to an error in receiving the physical channel, the set functional module is reactivated, and the operation result is updated by the set functional module according to an updated reference resource information set.

In an embodiment, the method also includes the following:

In response to an error in receiving the physical channel, a first transmission time-domain position configured by a system is determined as a first transmission occasion or a transmission occasion corresponding to RV0.

DCI scrambled by a CS-RNTI is sent to trigger a DG-PUSCH transmission.

In an embodiment, in response to the operation result including the position of the first transmission occasion and the first transmission occasion being determined to be RV0, time domain positions for multiple repeated transmissions of the physical channel are determined according to a repetition number indicated by radio resource control (RRC) signaling or a TDRA table.

FIG. 2 is a flowchart of a transmission method according to an embodiment. The method may be applied to a second communication node. The second communication node mainly refers to a terminal-side node, such as user equipment (UE). As shown in FIG. 2, the method provided in this embodiment includes 210 to 230.

In 210, a reference resource information set of a physical channel is sent.

In 220, the reference resource information set is input into a set functional module to obtain an operation result of the set functional module.

In 230, the physical channel is transmitted according to the operation result.

In this embodiment, the reference resource information set of the physical channel is sent, the reference resource information set is input into the set functional module to obtain an operation result of the set functional module, and the physical channel is transmitted according to the operation result, thereby effectively reducing latency of the physical channel transmission and improving correctness of the physical channel transmission.

In an embodiment, the reference resource information set includes at least one of the following: an arrival time, a data packet size, and a service performance requirement of a terminal-side service; an arrival time, a data packet size, a service performance requirement, and a frame structure of a terminal-side service; a service type of a terminal-side service; an arrival time and a period of a terminal-side service in a future period of time associated with a currently transmitted service; a frame structure, an idle resource, and a service transmission condition reported by a terminal; time-frequency domain resource information; a semi-static frame structure and a non-transmittable symbol pattern; or a semi-static frame structure and channel monitoring information.

In an embodiment, the operation result includes at least one of the following: a position of a first transmission occasion and a determination that the first transmission occasion is RV0; resource information corresponding to a service type of a terminal-side service; resource information of a terminal-side service and in response to the terminal-side service being not transmitted, allocating idle resources to other traffic channels; resource information corresponding to a terminal-side service in a future period of time associated with a currently transmitted service; a resource pool corresponding to a service type of a terminal-side service; time-frequency domain resources of a terminal-side service; a size of a nominal repetition transport block and a size of an actual repetition transport block; or enabling additional transmission occasions, where the additional transmission occasions include N transmission occasions added on the basis of configured repetition transmission occasions, and N is an integer greater than 0.

In an embodiment, the method also includes the following:

In response to an error in receiving the physical channel, the set functional module is reactivated, and the operation result is updated by the set functional module according to an updated reference resource information set.

In an embodiment, the method also includes the following:

In response to an error in receiving the physical channel, a first transmission time-domain position configured by a system is determined as a first transmission occasion or a transmission occasion corresponding to RV0.

In response to receiving DCI scrambled by a CS-RNTI, a DG-PUSCH is transmitted.

In an embodiment, in response to the operation result including the position of the first transmission occasion and the first transmission occasion being determined to be RV0, time domain positions for multiple repeated transmissions of the physical channel are determined according to a repetition number indicated by RRC signaling or a TDRA table.

The resource configuration method and the transmission method of the present application are exemplarily described below through some embodiments.

In the CG-PUSCH technology of current mobile communication systems, standards specify that the first transmission time-domain position of a CG-PUSCH is on the first TO or on the TO corresponding to RV index 0. This leads to a situation where the arrival of a service and a TO cannot be fully aligned, resulting in additional latency. The HARQ feedback mechanism on the network side for a CG-PUSCH also leads to increased DCI overhead or multiple invalid repeated transmissions of the CG-PUSCH.

FIG. 3 is a diagram illustrating a delay time involving three TOs according to an embodiment. As shown in FIG. 3, in the current standards of mobile communication systems, the time-domain resource positions configured by the network side for configured grant transmission are TOs for one or more repeated transmissions configured in each period, along with a corresponding RV pattern. When a CG-PUSCH arrives after the first TO of the first period, the CG-PUSCH misses the first TO or the TO where RV = 0, and the transmission of the CG-PUSCH can only be delayed to the first TO of the next period. Consequently, as shown in FIG. 3, a delay time of three TOs is resulted.

To address this issue, both the network side and the terminal side in this embodiment may utilize a set functional module to predict optimal resources at multiple time points.

### Embodiment one

This embodiment uses the network side as an example and proposes a method of operating a set functional module (such as an AI model) according to a received reference resource set to generate an operation result.

The reference resource set may include at least one of the following:
Method 1: The reference resource set includes an arrival time, a data packet size, and a service performance requirement of a terminal-side service. The deployed AI model takes the reference resource set as input parameters. Based on the training and prediction of the AI model, the position of the first TO is determined, and it is determined as RV0. According to the repetition number indicated by RRC signaling or a TDRA table, multiple time-domain positions for repeated transmissions are determined.
Method 2: The reference resource set includes an arrival time, a data packet size, a service performance requirement of a terminal-side service, and a frame structure configured by the system. The deployed AI model takes the reference resource set as input parameters. Based on the training and prediction of the AI model, resource information of the terminal-side service is output. When the service is not transmitted, idle resources are allocated to other traffic channels.
Method 3: The reference resource set is a service type of a to-be-transmitted service. The deployed AI model takes the service type of the to-be-transmitted service as an input parameter. Based on the training and prediction of the AI model, resource information (including information in time, frequency, and/or spatial domains) corresponding to the service type is output. Multiple sets of resource information targeting different service types have been pre-trained on the network-side functional module.
Method 4: The reference resource set includes an arrival time and a period of a to-be-transmitted service, in a future period of time, carried by the currently transmitted service. The deployed AI model takes the arrival time and the period of the to-be-transmitted service in the future period as input parameters and outputs resource information (including information in time, frequency, and/or spatial domains) corresponding to the period of time based on the training and prediction of the AI model.
Method 5: The reference resource set includes a frame structure, idle resources, and transmission situations reported by other terminals. The deployed AI model takes the reference resource set as input parameters. Based on the training, monitoring, and prediction of the network-side AI model, different resource pools are output. For services with poor channel conditions and high interference impact, resource pool 1 is allocated. For services with good channel conditions and low interference impact, resource pool 2 is allocated. The network side does not need to feed back HARQ information.
Method 6: The reference resource set is time-frequency domain resources configured by the system. The deployed AI model takes the reference resource set as input parameters. Based on the training, monitoring, and prediction of the network-side AI model, time-frequency domain resources for corresponding service transmission are output. That is, the functional module determines which resources the service should use by itself.

Fallback mechanism: The network side outputs resource information based on the preceding methods. Once the network side repeatedly detects reception errors, the fallback mechanism may include at least one of the following:
Method 1: The functional module is reactivated, and the operation result of the functional module is updated according to an updated reference resource set.
Method 2: Fallback to a mode without the functional module is performed, that is, fallback to conventional mobile communication transmission technologies is performed, including but not limited to the following: in response to an error in receiving a CG-PUSCH physical channel, determining a first transmission time-domain position configured by a system as a first transmission occasion or a transmission occasion corresponding to RV0; and in response to receiving DCI scrambled by CS-RNTI, transmitting a DG-PUSCH.

The terminal side may also deploy a set functional module (such as an AI model), input a reference resource information set into the set functional module to obtain an operation result, and transmit the physical channel (such as a CG-PUSCH) according to the operation result. For the reference resource information set, the operation result, and the fallback mechanism, reference may be made to the description of the network side. In addition, when the operation result includes the position of the first transmission occasion and the determination that the first transmission occasion is RV0, time-domain positions for multiple repeated transmissions of the physical channel may be determined according to a repetition number indicated by RRC signaling or a TDRA table.

### Embodiment two

This embodiment uses the terminal side as an example and proposes a method of operating a set functional module (such as an AI model) according to a received reference resource set to generate an operation result of the functional module.

The reference resource set may include at least one of the following:
Method 1: The reference resource set includes an arrival time, a data packet size, and a service performance requirement of a terminal-side service. The deployed AI model takes the reference resource set as input parameters. Based on the training and prediction of the AI model, the position of the first TO is determined, and it is determined as RV0. According to the repetition number indicated by RRC signaling or a TDRA table, multiple time-domain positions for repeated transmissions are determined.
Method 2: The reference resource set includes an arrival time, a data packet size, a service performance requirement of a terminal-side service, and a frame structure configured by the system. The deployed AI model takes the reference resource set as input parameters. Based on the training and prediction of the AI model, resource information of the terminal-side service is output. When the service is not transmitted, idle resources are allocated to other traffic channels.
Method 3: The reference resource set is a service type of a to-be-transmitted service. The deployed AI model takes the service type of the to-be-transmitted service as an input parameter. Based on the training and prediction of the AI model, resource information (including information in time, frequency, and/or spatial domains) corresponding to the service type is output. Multiple sets of resource information targeting different service types have been pre-trained on the terminal-side functional module.
Method 4: The reference resource set includes an arrival time and a period of a to-be-transmitted service in a future period of time carried by the currently transmitted service. The deployed AI model takes the arrival time and the period of the to-be-transmitted service in the future period as input parameters. Based on the training and prediction of the AI model, resource information (including information in time, frequency, and/or spatial domains) corresponding to the period of time is output.
Method 5: The reference resource set includes a frame structure, idle resources, and transmission situations reported by other terminals. The deployed AI model takes the reference resource set as input parameters. Based on the training, monitoring, and prediction of the terminal-side AI model, different resource pools are output. For services with poor channel conditions and high interference impact, resource pool 1 is allocated. For services with good channel conditions and low interference impact, resource pool 2 is allocated. The terminal side does not need to feed back HARQ information.
Method 6: The reference resource set is time-frequency domain resources configured by the system. The deployed AI model takes the reference resource set as input parameters. Based on the training, monitoring, and prediction of the terminal-side AI model, time-frequency domain resources for corresponding service transmission are output. That is, the functional module determines which resources the service should use.

Fallback mechanism: The terminal side outputs resource information based on the preceding methods. Once the terminal side repeatedly detects reception errors, the fallback mechanism may include at least one of the following:
Method 1: The functional module is reactivated, and the operation result of the functional module is updated according to an updated reference resource set.
Method 2: Fallback to a mode without the functional module is performed, that is, fallback to conventional mobile communication transmission technologies is performed.

The terminal side may also deploy a set functional module (such as an AI model), input a reference resource information set into the set functional module to obtain an operation result, and transmit the physical channel (such as a CG-PUSCH) according to the operation result. For the reference resource information set, the operation result, and the fallback mechanism, reference may be made to the description of the network side. In addition, when the operation result includes the position of the first transmission occasion and the determination that the first transmission occasion is RV0, time-domain positions for multiple repeated transmissions of the physical channel may be determined according to a repetition number indicated by RRC signaling or a TDRA table.

### Embodiment three

This embodiment uses the network side as an example and proposes a method of operating a set functional module (such as an AI model) according to a received reference resource set to generate an operation result of the functional module.

In current mobile communication systems, for CG-PUSCH repetition type B transmission, it is specified that when a nominal TB transmission encounters a slot boundary or non-transmittable symbols, multiple actual TB blocks are generated. The nominal TB is determined according to time-frequency domain resources notified by the base station, but the actual TB may experience an increase in actual coding rate due to reduced time-domain resources, leading to reception errors at the receiving terminal.

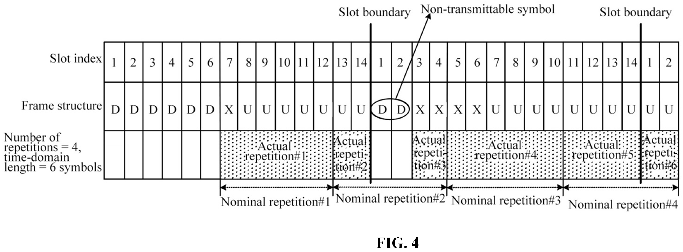

FIG. 4 is a diagram illustrating nominal repetitions and actual repetitions according to an embodiment. As shown in FIG. 4, nominal repetition #2 is split into actual repetition #2 and actual repetition #3 due to a slot boundary and non-transmittable symbols, and nominal repetition #4 is split into actual repetition #5 and actual repetition #6 due to a slot boundary. Thus, the nominal TB is determined based on the 6-symbol time-domain length of the nominal repetition. However, for actual repetitions #2, #3, #5, and #6, due to the reduction of time-domain resources, the actual coding rate must be continuously increased to transmit the transport block of the same data size, leading to reception errors at the receiving terminal.

The reference resource set includes a semi-static frame structure and a non-transmittable symbol pattern. The deployed AI model takes the reference resource set as input parameters. Based on the training and prediction of the AI model, the operation result of the functional module includes a size of a nominal repetition TB and a size of an actual repetition TB.

Further, the time-domain length of the nominal repetition TB is determined according to TDRA notification. The time-domain length of the actual repetition TB is determined according to the time-domain length of the actual transmission.

Further, multiple actual repetition TBs are combined to form one nominal repetition TB. As shown in FIG. 4, actual repetition #2 constitutes the first half of the nominal repetition, and actual repetition #3 constitutes the second half of the nominal repetition.

Fallback mechanism: The network side outputs resource information based on the preceding methods. Once the network side repeatedly detects reception errors, the fallback mechanism may include at least one of the following:
Method 1: The functional module is reactivated, and the operation result of the functional module is updated according to an updated reference resource set.
Method 2: Fallback to a mode without the functional module is performed, that is, fallback to conventional mobile communication transmission technologies is performed.

The terminal side may also deploy a set functional module (such as an AI model), input a reference resource information set into the set functional module to obtain an operation result, and transmit the physical channel (such as a CG-PUSCH) according to the operation result. For the reference resource information set, the operation result, and the fallback mechanism, reference may be made to the description of the network side. In addition, when the operation result includes the position of the first transmission occasion and the determination that the first transmission occasion is RV0, time-domain positions for multiple repeated transmissions of the physical channel may be determined according to a repetition number indicated by RRC signaling or a TDRA table.

### Embodiment four

This embodiment uses the terminal side as an example and proposes a method of operating a set functional module (such as an AI model) according to a received reference resource set to generate an operation result of the functional module.

The reference resource set includes a semi-static frame structure and a non-transmittable symbol pattern. The deployed AI model takes the reference resource set as input parameters. Based on the training and prediction of the AI model, the operation result of the functional module includes a size of a nominal repetition TB and a size of an actual repetition TB.

Further, the time-domain length of the nominal repetition TB is determined according to TDRA notification. The time-domain length of the actual repetition TB is determined according to the time-domain length of the actual transmission.

Further, multiple actual repetition TBs are combined to form one nominal repetition TB. As shown in FIG. 4, actual repetition #2 constitutes the first half of the nominal repetition, and actual repetition #3 constitutes the second half of the nominal repetition.

Fallback mechanism: The terminal side outputs resource information based on the preceding methods. Once the terminal side repeatedly detects reception errors, the fallback mechanism may include at least one of the following:
Method 1: The functional module is reactivated, and the operation result of the functional module is updated according to an updated reference resource set.
Method 2: Fallback to a mode without the functional module is performed, that is, fallback to conventional mobile communication transmission technologies is performed.

The terminal side may also deploy a set functional module (such as an AI model), input a reference resource information set into the set functional module to obtain an operation result, and transmit the physical channel (such as a CG-PUSCH) according to the operation result. For the reference resource information set, the operation result, and the fallback mechanism, reference may be made to the description of the network side. In addition, when the operation result includes the position of the first transmission occasion and the determination that the first transmission occasion is RV0, time-domain positions for multiple repeated transmissions of the physical channel may be determined according to a repetition number indicated by RRC signaling or a TDRA table.

### Embodiment five

In the current standards of mobile communication systems, for CG-PUSCH repetition type B transmission, when uplink control information (UCI) is multiplexed onto a PUSCH of repetition type B, the UCI is multiplexed only on the first actual repetition having more than one time-domain symbol. Moreover, the time-frequency domain resources occupied by the UCI are calculated by taking the minimum value of time-domain resources of the nominal repetition and time-domain resources of the actual repetition, and the time-domain resources of the actual repetition cannot be less than the resource amount required by the number of coded modulation symbols determined by the UCI.

In this manner, both a reasonable coding rate of the UCI and non-loss of UCI information are ensured. However, the transmission of the actual repetition will be affected. Once all resources of the actual repetition are used for UCI transmission, the actual repetition cannot be transmitted.

This embodiment uses the network side as an example and proposes a method of operating a set functional module (such as an AI model) according to a received reference resource set to generate an operation result of the functional module.

The reference resource set includes a semi-static frame structure and monitoring information of other channels. The deployed AI model takes the reference resource set as input parameters. Based on the training and prediction of the AI model, which actual transmissions will be discarded or erroneously decoded is obtained accurately. The operation result of the functional module is to enable additional TOs, thereby ensuring the number of repetition transmissions. The additional TOs refer to N transmission occasions added on the basis of the configured number of repetition TOs, where N is an integer greater than 0. Consequently, repeated transmission of the TB continues on the additional TOs.

Fallback mechanism: The network side outputs resource information based on the preceding methods. Once the network side repeatedly detects reception errors, the fallback mechanism may include at least one of the following:
Method 1: The functional module is reactivated, and the operation result of the functional module is updated according to an updated reference resource set.
Method 2: Fallback to a mode without the functional module is performed, that is, fallback to conventional mobile communication transmission technologies is performed.

The terminal side may also deploy a set functional module (such as an AI model), input a reference resource information set into the set functional module to obtain an operation result, and transmit the physical channel (such as a CG-PUSCH) according to the operation result. For the reference resource information set, the operation result, and the fallback mechanism, reference may be made to the description of the network side. In addition, when the operation result includes the position of the first transmission occasion and the determination that the first transmission occasion is RV0, time-domain positions for multiple repeated transmissions of the physical channel may be determined according to a repetition number indicated by RRC signaling or a TDRA table.

### Embodiment six

This embodiment uses the terminal side as an example and proposes a method of operating a set functional module (such as an AI model) according to a received reference resource set to generate an operation result of the functional module.

The reference resource set includes a semi-static frame structure and monitoring information of other channels. The deployed AI model takes the reference resource set as input parameters. Based on the training and prediction of the AI model, which actual transmissions will be discarded or erroneously decoded is obtained accurately. The operation result of the functional module is to enable additional TOs, thereby ensuring the number of repetition transmissions. The additional TOs refer to N transmission occasions added on the basis of the configured number of repetition TOs, where N is an integer greater than 0. Consequently, repeated transmission of the TB continues on the additional TOs.

Fallback mechanism: The terminal side outputs resource information based on the preceding methods. Once the terminal side repeatedly detects reception errors, the fallback mechanism may include at least one of the following:
Method 1: The functional module is reactivated, and the operation result of the functional module is updated according to an updated reference resource set.
Method 2: Fallback to a mode without the functional module is performed, that is, fallback to conventional mobile communication transmission technologies is performed.

The terminal side may also deploy a set functional module (such as an AI model), input a reference resource information set into the set functional module to obtain an operation result, and transmit the physical channel (such as a CG-PUSCH) according to the operation result. For the reference resource information set, the operation result, and the fallback mechanism, reference may be made to the description of the network side. In addition, when the operation result includes the position of the first transmission occasion and the determination that the first transmission occasion is RV0, time-domain positions for multiple repeated transmissions of the physical channel may be determined according to a repetition number indicated by RRC signaling or a TDRA table.

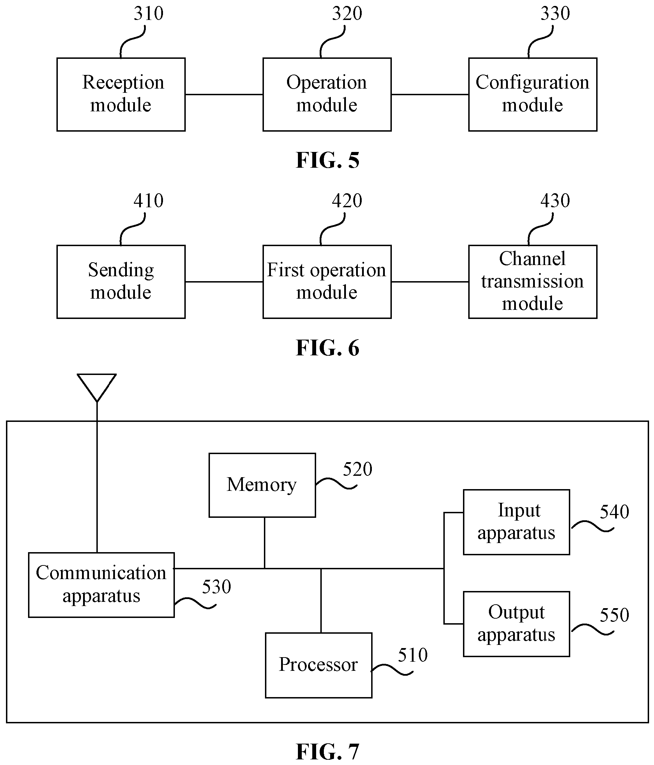

Embodiments of the present application also provide a resource configuration apparatus. FIG. 5 is a diagram illustrating the structure of a resource configuration apparatus according to an embodiment. As shown in FIG. 5, the resource configuration apparatus includes a reception module 310, an operation module 320, and a configuration module 330.

The reception module 310 is configured to receive a reference resource information set of a physical channel.

The operation module 320 is configured to input the reference resource information set into a set functional module to obtain an operation result of the set functional module.

The configuration module 330 is configured to configure a resource of the physical channel according to the operation result.

In this embodiment, the resource configuration apparatus first receives the reference resource information set of the physical channel, inputs the received reference resource information set as input parameters into the set functional module to generate an operation result of the set functional module, and configures resources of the physical channel according to the operation result of the set functional module. Since the set functional module is used to predict optimal resource information from the reference resource information set, latency of the physical channel transmission is effectively reduced, and correctness of the physical channel transmission is improved.

In an embodiment, the reference resource information set includes at least one of the following: an arrival time, a data packet size, and a service performance requirement of a terminal-side service; an arrival time, a data packet size, a service performance requirement, and a frame structure of a terminal-side service; a service type of a terminal-side service; an arrival time and a period of a terminal-side service in a future period of time associated with a currently transmitted service; a frame structure, an idle resource, and a service transmission condition reported by a terminal; time-frequency domain resource information; a semi-static frame structure and a non-transmittable symbol pattern; or a semi-static frame structure and channel monitoring information.

In an embodiment, the operation result includes at least one of the following: a position of a first transmission occasion and a determination that the first transmission occasion is RV0; resource information corresponding to a service type of a terminal-side service; resource information of a terminal-side service and in response to the terminal-side service being not transmitted, allocating idle resources to other traffic channels; resource information corresponding to a terminal-side service in a future period of time associated with a currently transmitted service; a resource pool corresponding to a service type of a terminal-side service; time-frequency domain resources of a terminal-side service; a size of a nominal repetition transport block and a size of an actual repetition transport block; or enabling additional transmission occasions, where the additional transmission occasions include N transmission occasions added on the basis of configured repetition transmission occasions, and N is an integer greater than 0.

In an embodiment, the time-domain length of the nominal repetition transport block is determined according to a TDRA table.

In an embodiment, the time-domain length of the actual repetition transport block is determined according to the time-domain length of the actual transmission.

In an embodiment, a single nominal repetition transport block is composed of multiple actual repetition transport blocks.

In an embodiment, the apparatus also includes an operation result update module.

The operation result update module is configured to, in response to an error in receiving the physical channel, reactivate the set functional module and update the operation result by the set functional module according to an updated reference resource information set.

In an embodiment, the apparatus also includes a transmission occasion determination module and a downlink control information sending module.

The transmission occasion determination module is configured to, in response to an error in receiving the physical channel, determine a first transmission time-domain position configured by a system as a first transmission occasion or a transmission occasion corresponding to RV0.

The downlink control information sending module is configured to send DCI scrambled by a CS-RNTI to trigger a DG-PUSCH transmission.

In an embodiment, in response to the operation result including the position of the first transmission occasion and the first transmission occasion being determined to be RV0, time domain positions for multiple repeated transmissions of the physical channel are determined according to a repetition number indicated by RRC signaling or a TDRA table.

The resource configuration apparatus provided in this embodiment belongs to the same inventive concept as the resource configuration method provided in the preceding embodiments. For technical details not described in detail in this embodiment, reference may be made to any one of the preceding embodiments, and this embodiment has the same beneficial effects as executing the resource configuration method.

Embodiments of the present application also provide a transmission apparatus. FIG. 6 is a diagram illustrating the structure of a transmission apparatus according to an embodiment. As shown in FIG. 6, the transmission apparatus includes a sending module 410, a first operation module 420, and a channel transmission module 430.

The sending module 410 is configured to send a reference resource information set of a physical channel.

The first operation module 420 is configured to input the reference resource information set into a set functional module to obtain an operation result of the set functional module.

The channel transmission module 430 is configured to transmit the physical channel according to the operation result.

In this embodiment, the transmission apparatus sends the reference resource information set of the physical channel, inputs the reference resource information set into the set functional module to obtain an operation result of the set functional module, and transmits the physical channel according to the operation result, thereby effectively reducing latency of the physical channel transmission and improving correctness of the physical channel transmission.

In an embodiment, the reference resource information set includes at least one of the following: an arrival time, a data packet size, and a service performance requirement of a terminal-side service; an arrival time, a data packet size, a service performance requirement, and a frame structure of a terminal-side service; a service type of a terminal-side service; an arrival time and a period of a terminal-side service in a future period of time associated with a currently transmitted service; a frame structure, an idle resource, and a service transmission condition reported by a terminal; time-frequency domain resource information; a semi-static frame structure and a non-transmittable symbol pattern; or a semi-static frame structure and channel monitoring information.

In an embodiment, the operation result includes at least one of the following: a position of a first transmission occasion and a determination that the first transmission occasion is RV0; resource information corresponding to a service type of a terminal-side service; resource information of a terminal-side service and in response to the terminal-side service being not transmitted, allocating idle resources to other traffic channels; resource information corresponding to a terminal-side service in a future period of time associated with a currently transmitted service; a resource pool corresponding to a service type of a terminal-side service; time-frequency domain resources of a terminal-side service; a size of a nominal repetition transport block and a size of an actual repetition transport block; or enabling additional transmission occasions, where the additional transmission occasions include N transmission occasions added on the basis of configured repetition transmission occasions, and N is an integer greater than 0.

In an embodiment, the apparatus also includes an activation module.

The activation module is configured to, in response to an error in receiving the physical channel, reactivate the set functional module and update the operation result by the set functional module according to an updated reference resource information set.

In an embodiment, the apparatus also includes a first transmission occasion determination module and a downlink control information receiving module.

The first transmission occasion determination module is configured to, in response to an error in receiving the physical channel, determine a first transmission time-domain position configured by a system as a first transmission occasion or a transmission occasion corresponding to RV0.

The downlink control information receiving module is configured to, in response to receiving DCI scrambled by a CS-RNTI, transmit a DG-PUSCH.

In an embodiment, in response to the operation result including the position of the first transmission occasion and the first transmission occasion being determined to be RV0, time domain positions for multiple repeated transmissions of the physical channel are determined according to a repetition number indicated by RRC signaling or a TDRA table.

The transmission apparatus provided in this embodiment and the transmission method provided in the preceding embodiments belong to the same concept. For technical details not described in detail in this embodiment, reference may be made to any one of the preceding embodiments. The embodiment has the same beneficial effects as the applied transmission method.

Embodiments of the present application also provide a communication node. FIG. 7 is a diagram illustrating the hardware structure of a communication node according to an embodiment. As shown in FIG. 7, the communication node provided by the present application includes a processor 510 and a memory 520. The communication node may include one or more processors 510, with one processor 510 shown in FIG. 7 as an example. The memory 520 is configured to store one or more programs that, when executed by the one or more processors 510, cause the one or more processors 510 to implement the resource configuration method or the transmission method described in embodiments of the present application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners. Connection via the bus is used as an example in FIG. 7.

The input apparatus 540 may be configured to receive input digital or character information and generate key signal input related to user settings and function control of the communication node. The output apparatus 550 may include a display device, for example, a display screen.

The communication apparatus 530 may include a receiver and a transmitter. The communication apparatus 530 is configured to perform information transmission and reception communication under the control of the processor 510,

As a computer-readable storage medium, the memory 520 may be configured to store software programs, computer-executable programs, and modules, such as program instructions/modules (for example, the reception module 310, the operation module 320, and the configuration module 330 in the resource configuration apparatus) corresponding to the resource configuration method according to embodiments of the present application. The memory 520 may include a program storage region and a data storage region. The program storage region may store an operating system and an application program required by at least one function. The data storage region may store data or the like created according to the use of the communication node. Additionally, the memory 520 may include a high-speed random-access memory and may also include a nonvolatile memory such as at least one disk memory, flash memory, or another nonvolatile solid-state memory. In some examples, the memory 520 may include memories that are remotely disposed with respect to the processor 510, and these remote memories may be connected to the communication node via a network. Examples of the preceding network include but are not limited to, the Internet, an intranet, a local area network, a mobile communication network, and a combination thereof.

Embodiments of the present application also provide a storage medium. The storage medium stores a computer program that, when executed by a processor, implements the resource configuration method according to any embodiment of the present application. The method includes receiving a reference resource information set of a physical channel, inputting the reference resource information set into a set functional module to obtain an operation result of the set functional module, and configuring a resource of the physical channel according to the operation result. Alternatively, the program, when executed by a processor, implements the transmission method according to any embodiment of the present application. The method includes sending a reference resource information set of a physical channel, inputting the reference resource information set into a set functional module to obtain an operation result of the set functional module, and transmitting the physical channel according to the operation result.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The above are only example embodiments of the present application and not intended to limit the scope of the present application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology, such as, but not limited to, a ROM, a RAM, and an optical memory apparatus and system (DVD or a CD). Computer-readable medium may include a non-transitory storage medium. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art without deviating from the scope of the present application. Accordingly, the proper scope of the present application is determined according to the claims.

## Claims

1. A resource configuration method, comprising:
receiving a reference resource information set of a physical channel;
inputting the reference resource information set into a set functional module to obtain an operation result of the set functional module; and
configuring a resource of the physical channel according to the operation result.

2. The resource configuration method according to claim 1, wherein the reference resource information set comprises at least one of the following:
an arrival time, a data packet size, and a service performance requirement of a terminal-side service;
an arrival time, a data packet size, a service performance requirement, and a frame structure of a terminal-side service;
a service type of a terminal-side service;
an arrival time and a period of a terminal-side service in a future period of time associated with a currently transmitted service;
a frame structure, an idle resource, and a service transmission condition reported by a terminal;
time-frequency domain resource information;
a semi-static frame structure and a non-transmittable symbol pattern; or
a semi-static frame structure and channel monitoring information.

3. The resource configuration method according to claim 1, wherein the operation result comprises at least one of the following:
a position of a first transmission occasion and a determination that the first transmission occasion is redundancy version (RV)0;
resource information corresponding to a service type of a terminal-side service;
resource information of a terminal-side service and in response to the terminal-side service being not transmitted, allocating idle resources to other traffic channels;
resource information corresponding to a terminal-side service in a future period of time associated with a currently transmitted service;
a resource pool corresponding to a service type of a terminal-side service;
time-frequency domain resources of a terminal-side service;
a size of a nominal repetition transport block and a size of an actual repetition transport block; or
enabling additional transmission occasions, wherein the additional transmission occasions comprise N transmission occasions added on a basis of configured repetition transmission occasions, and N is an integer greater than 0.

4. The resource configuration method according to claim 3, wherein a time-domain length of the nominal repetition transport block is determined according to a time domain resource allocation (TDRA) table.

5. The resource configuration method according to claim 3, wherein a time-domain length of the actual repetition transport block is determined according to a time-domain length of an actual transmission.

6. The resource configuration method according to claim 3, wherein a single nominal repetition transport block is composed of a plurality of actual repetition transport blocks.

7. The resource configuration method according to any one of claims 1 to 6, further comprising:
in response to an error in receiving the physical channel, reactivating the set functional module, and updating the operation result by the set functional module according to an updated reference resource information set.

8. The resource configuration method according to any one of claims 1 to 6, further comprising:
in response to an error in receiving the physical channel, determining a first transmission time-domain position configured by a system as a first transmission occasion or a transmission occasion corresponding to RV0; and
sending downlink control information (DCI) scrambled by a configured scheduling-radio network temporary identifier (CS-RNTI) to trigger a dynamic grant-physical uplink shared channel (DG-PUSCH) transmission.

9. The resource configuration method according to claim 2, further comprising:
in response to the operation result comprising the position of the first transmission occasion and the first transmission occasion being determined to be RV0, determining time domain positions for a plurality of repeated transmissions of the physical channel according to a repetition number indicated by radio resource control (RRC) signaling or a TDRA table.

10. A transmission method, comprising:
sending a reference resource information set of a physical channel;
inputting the reference resource information set into a set functional module to obtain an operation result of the set functional module; and
transmitting the physical channel according to the operation result.

11. The transmission method according to claim 10, wherein the reference resource information set comprises at least one of the following:
an arrival time, a data packet size, and a service performance requirement of a terminal-side service;
an arrival time, a data packet size, a service performance requirement, and a frame structure of a terminal-side service;
a service type of a terminal-side service;
an arrival time and a period of a terminal-side service in a future period of time associated with a currently transmitted service;
a frame structure, an idle resource, and a service transmission condition reported by a terminal;
time-frequency domain resource information;
a semi-static frame structure and a non-transmittable symbol pattern; or
a semi-static frame structure and channel monitoring information.

12. The transmission method according to claim 10, wherein the operation result comprises at least one of the following:
a position of a first transmission occasion and a determination that the first transmission occasion is redundancy version (RV)0;
resource information corresponding to a service type of a terminal-side service;
resource information of a terminal-side service and in response to the terminal-side service being not transmitted, allocating idle resources to other traffic channels;
resource information corresponding to a terminal-side service in a future period of time associated with a currently transmitted service;
a resource pool corresponding to a service type of a terminal-side service;
time-frequency domain resources of a terminal-side service;
a size of a nominal repetition transport block and a size of an actual repetition transport block; or
enabling additional transmission occasions, wherein the additional transmission occasions comprise N transmission occasions added on a basis of configured repetition transmission occasions, and N is an integer greater than 0.

13. The transmission method according to any one of claims 10 to 12, further comprising:
in response to an error in receiving the physical channel, reactivating the set functional module, and updating the operation result by the set functional module according to an updated reference resource information set.

14. The transmission method according to any one of claims 10 to 12, further comprising:
in response to an error in receiving the physical channel, determining a first transmission time-domain position configured by a system as a first transmission occasion or a transmission occasion corresponding to RV0; and
in response to receiving downlink control information (DCI) scrambled by a configured scheduling-radio network temporary identifier (CS-RNTI), transmitting a dynamic grant-physical uplink shared channel (DG-PUSCH).

15. The transmission method according to claim 12, further comprising:
in response to the operation result comprising the position of the first transmission occasion and the first transmission occasion being determined to be RV0, determining time domain positions for a plurality of repeated transmissions of the physical channel according to a repetition number indicated by radio resource control (RRC) signaling or a time domain resource allocation (TDRA) table.

16. A communication node, comprising: a memory and one or more processors; wherein
the memory is configured to store one or more programs; and
when executed by the one or more processors, the one or more programs cause the one or more processors to implement the resource configuration method according to any one of claims 1 to 9 or the transmission method according to any one of claims 10 to 15.

17. A computer-readable storage medium storing a computer program that, when executed by a processor, implements the resource configuration method according to any one of claims 1 to 9 or the transmission method according to any one of claims 10 to 15.
